# EUROPEAN PATENT APPLICATION

(11) **EP 3 944 360 A1**
(43) Date of publication of application: **26.01.2022**
(21) Application number: 20774144.8
(22) Date of filing: 11.03.2020
(51) Int. Cl.: H01M 2/10

(54) **SUPPORTING BODY, AND STORAGE BATTERY MODULE**

(30) Priority: 18.03.2019 JP 2019050015
(71) Applicant: Panasonic Intellectual Property Management Co., Ltd., Osaka-shi, Osaka 540-6207 (JP)
(72) Inventor: TOYA, Shoichi, Chuo-ku, Osaka-shi, Osaka 540-6207 (JP); ISHIMOTO, Kazuo, Chuo-ku, Osaka-shi, Osaka 540-6207 (JP); MUKAI, Taiki, Chuo-ku, Osaka-shi, Osaka 540-6207 (JP)
(74) Representative: Appelt, Christian W.
(86) International application number: PCT/JP2020/010414
(87) International publication number: WO 2020/189424

(57) **Abstract**

In a support member, m×n (n is an integer equal to or larger than 4) cylindrical storage battery cells 210 are arranged in a trefoil formation structure comprised of m (m is an integer equal to or larger than 4) tiers along a first direction. Along a second direction in the support member that intersects the first direction, n storage battery cells 210 are arranged in a first tier, n+1 storage battery cells 210 are arranged in a second tier, n storage battery cells are arranged in an m-1th tier, and n-1 storage battery cells are arranged in a m-th tier. In the support member, the n storage battery cells in the first tier are arranged inward of the n+1 storage battery cells in the second tier in the second direction, and the n-1 storage battery cells in the m-th tier are arranged inward of the n storage battery cells in the m-1th tier in the second direction.

## Description

### [TECHNICAL FIELD]

The present disclosure relates to a support structure and, more particularly, to a support member and a storage battery module that house a plurality of storage battery cells.

### [BACKGROUND ART]

When a plurality of cylindrical unit batteries are arranged in a trefoil formation such that the batteries are placed in contact with each other, the gap between the outer circumferential surfaces of the unit batteries can be minimized and high energy density of the battery pack can be achieved. However, the unit battery located at the corner of the outer circumferential part of the unit battery group is adjacent to fewer unit batteries than the other unit batteries located elsewhere. When the unit battery located at the corner dissipates heat abnormally, the adjacent unit batteries will also be at an abnormal temperature because the number of paths to transfer heat from that unit battery is relatively small. This is addressed by providing a metal frame that extends along the circumference of the unit battery group to surround the unit battery group and by placing the unit battery located at the corner of the unit battery group, which presents a substantially rectangular shape as viewed from the axial end of the unit batteries, in contact with the metal frame (see, for example, patent literature 1).

[Patent Literature 1] WO17/081838

### [SUMMARY OF INVENTION]

### [TECHNICAL PROBLEM]

It is desired to increase the number of adjacent batteries when a plurality of batteries are arranged in a trefoil formation.

The present disclosure addresses the above-described issue, and a purpose thereof is to provide a technology of increasing the number of adjacent batteries when a plurality of batteries are arranged in a trefoil formation.

### [SOLUTION TO PROBLEM]

A support member according to an embodiment of the present disclosure is a support member for arranging m×n (n is an integer equal to or larger than 4) cylindrical batteries in a trefoil formation structure comprised of m (m is an integer equal to or larger than 4) tiers along a first direction, wherein along a second direction that intersects the first direction, n batteries are arranged in a first tier, n+1 batteries are arranged in a second tier, n batteries are arranged in an m-1th tier, and n-1 batteries are arranged in a m-th tier, the n batteries in the first tier are arranged inward of the n+1 batteries in the second tier in the second direction, and the n-1 batteries in the m-th tier are arranged inward of the n batteries in the m-1th tier in the second direction.

Another embodiment of the present disclosure relates to a storage battery module. The battery module includes: a plurality of storage battery cells; an inner case that houses the plurality of storage battery cells; and an outer case that houses the inner case. Each of the plurality of storage battery cells has a cylindrical shape. The inner case includes a support member for arranging m×n (n is an integer equal to or larger than 4) storage battery cells in a trefoil formation structure comprised of m (m is an integer equal to or larger than 4) tiers along a first direction. In the support member, along a second direction that intersects the first direction, n storage battery cells are arranged in a first tier, n+1 storage battery cells are arranged in a second tier, n storage battery cells are arranged in an m-1th tier, and n-1 storage battery cells are arranged in a m-th tier, the n storage battery cells in the first tier are arranged inward of the n+1 storage battery cells in the second tier in the second direction, and the n-1 storage battery cells in the m-th tier are arranged inward of the n storage battery cells in the m-1th tier in the second direction.

### [ADVANTAGEOUS EFFECTS OF INVENTION]

According to the present disclosure, the number of adjacent batteries can be increased when a plurality of batteries are arranged in a trefoil formation.

### [BRIEF DESCRIPTION OF DRAWINGS]

Figs. 1A-1D are perspective views showing a structure of a storage battery module according to the embodiment;
Fig. 2 is an exploded perspective view showing a structure of the storage battery module of Figs. 1A-1D;
Figs. 3A-3B show an arrangement of the storage battery cells in the storage battery module of Figs. 1A-1D;
Figs. 4A-4F show arrangements of the storage battery cells;
Figs. 5A-5B show temperature change in the storage battery cell;
Figs. 6A-6C are perspective views showing a structure of a storage battery module according to a variation;
Fig. 7 is a cross-sectional view showing a structure of the storage battery module of Fig. 6A; and
Figs. 8A-8C are perspective views showing a structure of the storage battery module according to the variation.

### [DESCRIPTION OF EMBODIMENTS]

A summary will be given before describing the embodiment of the present disclosure in specific details. This embodiment relates to a storage battery module in which a plurality of storage battery cells are housed. In the case the storage battery is a lithium ion secondary battery, a gas is generated in the storage battery cell in the event that an internal short-circuit occurs. Generation of the gas increases the pressure in the storage battery cell, but the safety mechanism discharges the gas from the anode side outside the storage battery cell. The gas in this case is at a high temperature and a high pressure so that combustion induced by the gas causes other storage battery cells in the storage battery module to undergo thermal runaway (catch fire). The spread of fire may burn the entirety of the storage battery module or the entire product. To inhibit combustion induced by the gas, it is effective to provide a discharge port in the storage battery module to discharge the gas out of the storage battery module from the discharge port. However, downsizing of a storage battery module reduces a distance between each storage battery cell and the discharge port. As a result, the high-temperature high-pressure gas would be discharged directly from the discharge port, creating a dangerous situation outside.

In the storage battery module according to this embodiment, a plurality of storage battery cells are housed in an inner case, and the inner case is housed in an outer case. An inner discharge port is provided in the inner case, and an outer discharge port is provided in the outer case. Further, a discharge path on which the high-temperature high-pressure gas is circulated is provided between the inner case and the outer case. With such a structure, the high-temperature high-pressure gas emitted from the storage battery cell moves inside the inner case and is discharged out of the inner case from the inner discharge port. The high-temperature high-pressure gas discharged outside the inner case passes through the discharge path and is discharged out of the outer case from the outer discharge port. As a result, the path on which the high-temperature high-pressure gas travels in the storage battery module is extended, and the area of contact between the outer case/inner case and the high-temperature, high-pressure gas is increased. This cools the high-temperature high-pressure gas in the storage battery module.

In such a storage battery module, a plurality of storage battery cells are arranged in a trefoil formation in order to minimize the gap between the outer circumferential surfaces of the storage battery cells. Of the plurality of storage battery cells arranged in the trefoil formation, the storage battery cell located at the corner is adjacent to only two other storage battery cells. When the number of adjacent other storage battery cells is small and when the storage battery cell located at the corner dissipates heat abnormally, the adjacent other storage battery cells will also be at an abnormal temperature because the number of paths to transfer heat from that storage battery cell is relatively small. It is therefore desired to increase, of the plurality of storage battery cells arranged in the trefoil formation, the number of other storage batteries adjacent to the storage battery cell located at the corner. The terms "parallel" and "perpendicular" in the following description not only encompass completely parallel or perpendicular but also encompass off-parallel and off-perpendicular within the margin of error. The term "substantially" means identical within certain limits.

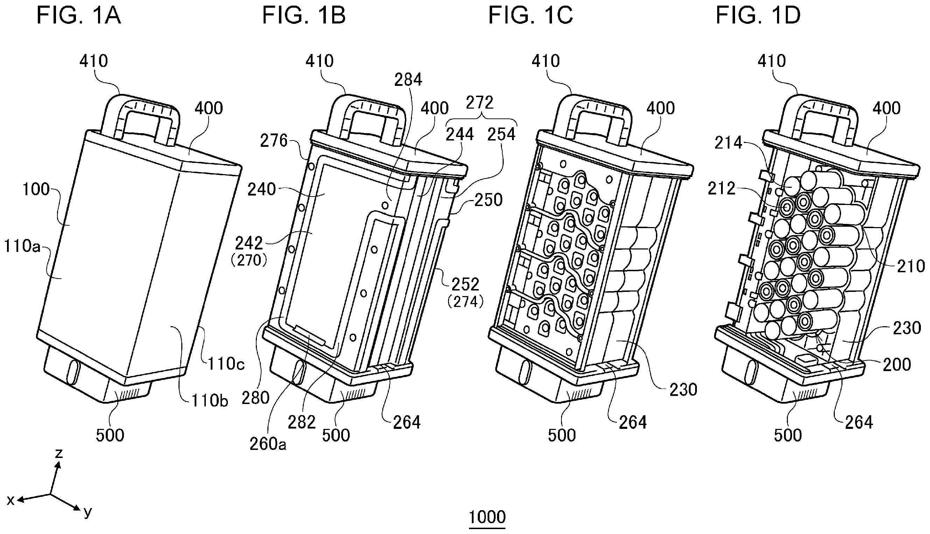

Figs. 1A-1D are perspective views showing a structure of a storage battery module 1000. As shown in Figs. 1A-1D, an orthogonal coordinate system including the x axis, the y axis, and the z axis is defined. The x axis and the y axis are orthogonal to each other in the bottom surface of the storage battery module 1000. The z axis is perpendicular to the x axis and the y axis and extends in the height (perpendicular) direction of the storage battery module 1000. The positive direction of each of the x axis, the y axis, and the z axis is defined in the direction of arrow in Figs. 1A-1D, and the negative direction is defined in the direction opposite to the direction of arrow. The positive direction side along the x axis may be referred to as "front side" or "frontal side", the negative direction side along the x axis may be referred to as "back side" or "back surface side", the positive direction side along the z axis may be referred to as "top side" or "ceiling surface side", and the negative direction side along the z axis may be referred to as "lower side" or "bottom surface side". Further, the positive direction side along the y axis may be referred to as "rightward", and the negative direction side along the y axis may be referred to as "leftward".

Fig. 1A shows an appearance of the storage battery module 1000. The storage battery module 1000 includes an outer case 100, an upper case 400, and a lower case 500. Like the outer case 100, the upper case 400 and the lower case 500 are also exposed outside and so may be included in the outer case 100. The combination of the outer case 100, the upper case 400, and the lower case 500 has a box shape elongated in the vertical direction. The outer case 100 includes a first outer plate 110a, a second outer plate 110b, a third outer plate 110c, and a fourth outer plate 110d (not shown), which are generically referred to as outer plates 110, and is located on the side surfaces of the box shape. Each outer plate 110 has a shape of a rectangular plate and is made of, for example, metal.

The upper case 400 is connected to the upper side of the outer case 100 and represents the lid part of the outer case 100. An arch-shaped handle 410 projecting upward is provided in the upper case 400. The upper case 400 is made of, for example, resin or metal. The lower case 500 is connected to the lower side of the outer case 100 and represents the bottom part of the outer case 100. The lower case 500 has a shape projecting further downward from the outer case 100. The lower case 500 is made of, for example, resin.

Fig. 1B shows a structure revealed when the outer case 100 of Fig. 1A is removed. A front case 240 and a rear case 250 are provided inside the outer case 100. The front case 240 includes a front case front surface 242 and a front case side surface 244. The front case front surface 242 has a shape of a rectangular plate extending on the x-y plane, and the front case side surface 244 has a shape of a rectangular plate extending on the z-x plane. Further, the front case side surface 244 is provided to extend rearward from the right side end of the front case front surface 242. The rear case 250 includes a rear case rear surface 252 and a rear case side surface 254. The rear case rear surface 252 has a shape of a rectangular plate extending on the x-y plane, and the rear case side surface 254 has a shape of a rectangular plate extending on the z-x plane. Further, the rear case side surface 254 is provided to extend frontward from the right side end of the rear case rear surface 252.

The front case side surface 244 and the rear case side surface 254 are connected such that the rear end of the front case side surface 244 and the front end of the rear case side surface 254 are in contact. As a result, the front case side surface 244 and the rear case side surface 254 form a single surface, and the surface is referred to as a second surface 272. In association with the second surface 272, the front case front surface 242 is referred to as a first surface 270, and the rear case rear surface 252 is referred to as a third surface 274. The first surface 270 faces the first outer plate 110a of the outer case 100. The second surface 272 faces the second outer plate 110b of the outer case 100 and is adjacent to the first surface 270. Further, the third surface 274 faces the third outer plate 110c of the outer case 100, is adjacent to the second surface 272, and faces a direction opposite to the first surface 270. In other words, the combination of the front case 240 and the rear case 250 has three rectangular surfaces. The front case 240 and the rear case 250 are made of, for example, metal. The detail of the structure in the front case 240 and the rear case 250 will be described in detail later.

Fig. 1C shows a structure revealed when the front case 240 and the rear case 250 of Fig. 1B are removed. A battery holder 230 is provided inside the front case 240 and the rear case 250. The battery holder 230 has a box shape elongated in the vertical direction. The battery holder 230 is made of an insulative material such as resin. Fig. 1D shows a structure revealed when the battery holder 230 of Fig. 1C is removed. A plurality of storage battery assemblies 200 are housed in the battery holder 230, and each storage battery assembly 230 can be said to be a support member. The storage battery assembly 200 includes a plurality of storage battery cells 210.

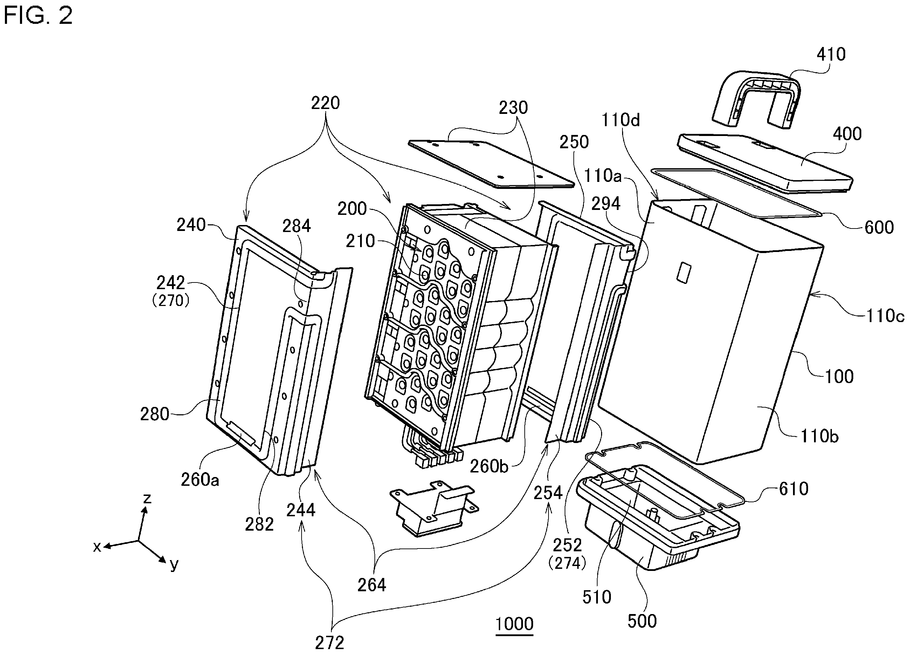

Fig. 2 is an exploded perspective view showing a structure of the storage battery module 1000. The storage battery module 1000 includes an outer case 100, a battery holder 230, a front case 240, a rear case 250, an upper case 400, a lower case 500, an upper packing 600, and a lower packing 610. These constituting elements are connected by screws, welding, adhesive materials, etc. A publicly known technology may be used so that a description thereof is omitted.

As described above, the battery holder 230 has a box shape elongated in the vertical direction and houses the storage battery assembly 200. Each storage battery assembly 200 includes a plurality of storage battery cells 210. The storage battery cell 210 is, for example, a lithium ion secondary battery having a columnar or cylindrical shape. An anode 212 and a cathode 214 facing opposite directions are provided at the ends of columnar shape of the storage battery cell 210. A publicly known technology may be used for the storage battery cell 210. A safety mechanism for discharging a high-temperature high-pressure gas outside when the internal pressure rises due to the occurrence of internal short-circuit, etc. Generally, the high-temperature high-pressure gas is discharged from the anode 212. Some of the plurality of storage battery cells 210 are provided such that the anode 212 faces frontward, and the rest of the plurality of of storage battery cells 210 are provided such that the cathode 214 faces frontward. The former represents arranging the anode 212 to face the first surface 270, and the latter represents arranging the cathode 214 to face the first surface 270. For example, the number of storage battery cells 210 arranged in the former manner and the number of storage battery cells 210 arranged in the latter manner are identical.

The front surface and a portion of the right surface of the battery holder 230 are covered by the front case 240, and the rear surface and the remaining portion of the right surface of the battery holder 230 are covered by the rear case 250. The combination of the battery holder 230, the front case 240, and the rear case 250 is an inner case 220, and the inner case 220 houses a plurality of storage battery cells 210 inside.

A left side wall 280 extending in the vertical direction is provided at the left edge of the first surface 270 of the front case 240. The left side wall 280 projects frontward to be in contact with the first outer plate 110a of the outer case 100. A right side wall 282 extending in the vertical direction is provided at the right edge of the first surface 270 of the front case 240. The right side wall 282 also projects frontward to be in contact with the first outer plate 110a of the outer case 100. The left side wall 280 extends across substantially the entirety of the first surface 270 in the vertical direction, but the right side wall 282 extends in a length shorter than the left side wall 280, and a passage groove 284 is provided above the right side wall 282. The passage groove 284 connects the first surface 270 and the second surface 272 continuously. A first inner discharge port 260a extending in the horizontal direction is provided on the lower side of the area of the first surface 270 sandwiched by the left side wall 280 and the right side wall 282. The first inner discharge port 260a extends through the first surface 270.

Meanwhile, the third surface 274 of the rear case 250 has a structure similar to that of the first surface 270. Therefore, like the passage groove 284 in the first surface 270, a passage groove 294 is provided in the third surface 274. The passage groove 294 connects the third surface 274 and the second surface 272 continuously. In association with the first inner discharge port 260a in the first surface 270, a second inner discharge port 260b extending in the horizontal direction is provided in the lower part of the third surface 274. The second inner discharge port 260b extends through the third surface 274.

Further, as also shown in Fig. 1B, an intermediate discharge port 264 extending in the horizontal direction is provided in the lower part of the second surface 272. The intermediate discharge port 264 opens to be connected to an extended space 510 provided inside the lower case 500. The extended space 510 is a space that opens upward. The opening of the extended space 510 is blocked by the battery holder 230, the front case 240, and the rear case 250 outside the portion connected to the intermediate discharge port 264. Further, the extended space 510 is connected to an outer discharge port (not shown) provided in the lower case 500. The lower case 500 is connected to the outer case 100 via the lower packing 610, and the outer case 100 is connected to the upper case 400 via the upper packing 600. In this way, the outer case 100 houses the battery holder 230, the front case 240, and the rear case 250.

In the case any of the storage battery cells 210 undergoes thermal runaway in the storage battery module 1000 having the above-described structure, the storage battery cell 210 emits a high-temperature high-pressure gas from the anode 212. The high-temperature high-pressure gas is guided to the first inner discharge port 260a or the second inner discharge port 260b as it comes into contact with the first surface 270 or the third surface 274. The high-temperature high-pressure gas is discharged from the first inner discharge port 260a to the space between the first surface 270 and the first outer plate 110a and is guided to the passage groove 284 as it comes into contact with the first surface 270 and the first outer plate 110a. Alternatively, the high-temperature high-pressure gas is discharged from the second inner discharge port 260b to the space between the third surface 274 and the third outer plate 110c and is guided to the passage groove 284 as it comes into contact with the third surface 274 and the third outer plate 110c.

The high-temperature high-pressure gas moves from the passage groove 284 or the passage groove 294 to the second surface 272. The high-temperature high-pressure gas travels to the intermediate discharge port 264 as it comes into contact with the second surface 272 and the second outer plate 110b. The high-temperature high-pressure gas is discharged from the intermediate discharge port 264 to the extended space 510. The extended space 510 is a space wider than the preceding paths. As the high-temperature high-pressure gas enters the extended space 510, the pressure of the high-temperature high-pressure gas is reduced, and the temperature of the high-temperature high-pressure gas is reduced. Further, an outer discharge port (not shown) connected to the extended space 510 is provided in the lower part of the lower case 500. The outer discharge port extends through the lower case 500. The high-temperature high-pressure gas in the extended space 510 is discharged outside from the outer discharge port.

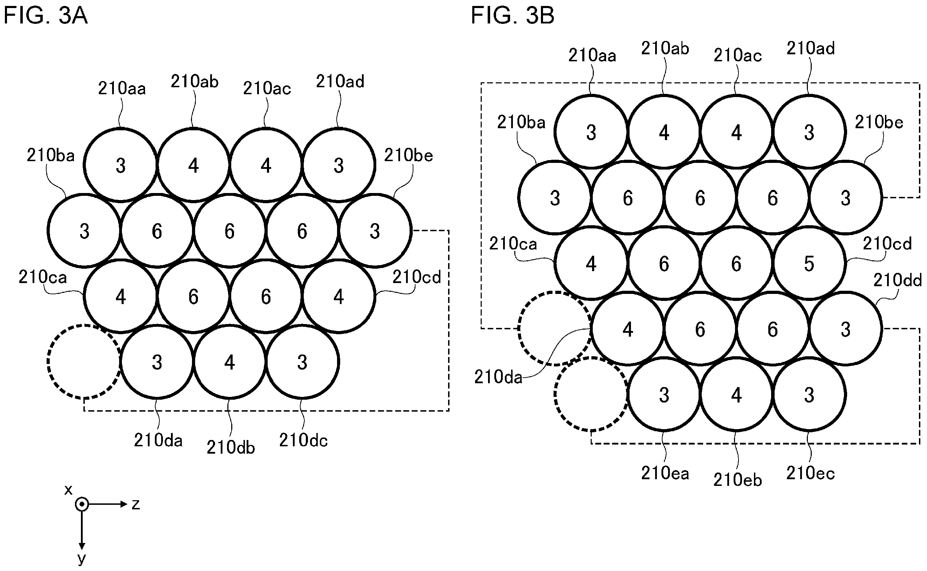

Figs. 3A-3B show an arrangement of the storage battery cells 210 in the storage battery module 1000. Fig. 3A shows a structure in which the number of storage battery cells 210 in the z-axis direction is changed in the plurality of storage battery cells 210 shown in Fig. 1D. "First" through "fourth" tiers are sequentially defined along the y-axis direction. In the first tier, an 11th storage battery cell 210aa through a 14th storage battery cell 210ad are arranged along the z-axis direction. In the second tier, a 21st storage battery cell 210ba through a 25th storage battery cell 210be are arranged along the z-axis direction. In the third tier, a 31st storage battery cell 210ca through a 34th storage battery cell 210cd are arranged along the z-axis direction. In the fourth tier, a 41st storage battery cell 210da through a 43rd storage battery cell 210dc are arranged along the z-axis direction.

To summarize the above, four storage battery cells 210 are arranged in the first tier, five storage battery cells 210 are arranged in the second tier, four storage battery cells 210 are arranged in the third tier, and three storage battery cells 210 are arranged in the fourth tier. Further, the four storage battery cells 210 in the first tier are arranged inward of the five storage battery cells 210 in the second tier in the z-axis direction. Further, the three storage battery cells 210 in the fourth tier are arranged inward of the four storage battery cells 210 in the third tier in the z-axis direction. Each storage battery cell 210 is labeled by the number of adjacent storage battery cells 210. As illustrated, the number of adjacent storage battery cells 210 is "3" or larger.

Meanwhile, when the 25th storage battery cell 210be is moved to the left of the 41st storage battery cell 210da, an ordinary trefoil formation structure comprised of four tires is formed such that four storage battery cells 210 are arranged per one tier. The storage battery cell 210 moved from the 25th storage battery cell 210be is indicated by a dotted line. This storage battery cell 210 is adjacent to "2" storage battery cells 210. Thus, the number of adjacent storage battery cells 210 is increased by turning the ordinary trefoil formation structure into a trefoil formation structure as shown in Fig. 3A.

Fig. 3B shows an arrangement of storage battery cells 210 in which the number of tiers is increased to "5" from Fig. 3A. In the first tier, the 11th storage battery cell 210aa through the 14th storage battery cell 210ad are arranged along the z-axis direction. In the second tier, the 21st storage battery cell 210ba through the 25th storage battery cell 210be are arranged along the z-axis direction. In the third tier, the 31st storage battery cell 210ca through the 34th storage battery cell 210cd are arranged along the z-axis direction. In the fourth tier, the 41st storage battery cell 210da through a 44th storage battery cell 210dd are arranged along the z-axis direction. In the fifth tier, a 51st storage battery cell 210ea through a 53rd storage battery cell 210ec are arranged along the z-axis direction.

To summarize the above, four storage battery cells 210 are arranged in the first tier, five storage battery cells 210 are arranged in the second tier, four storage battery cells 210 are arranged in the third tier and the fourth tier, and three storage battery cells 210 are arranged in the fifth tier. Further, the four storage battery cells 210 in the first tier are arranged inward of the five storage battery cells 210 in the second tier in the z-axis direction. Further, the three storage battery cells 210 in the fifth tier are arranged inward of the four storage battery cells 210 in the fourth tier in the z-axis direction. Each storage battery cell 210 is labeled by the number of adjacent storage battery cells 210. As illustrated, the number of adjacent storage battery cells 210 is "3" or larger in this case, too.

Meanwhile, when the 25th storage battery cell 210be is moved to the left of the 41st storage battery cell 210da and the 44th storage battery cell 210dd is moved to the left of the 51st storage cell 210ea, an ordinary trefoil formation structure comprised of five tires is formed such that four storage battery cells 210 are arranged per one tier. The storage battery cell 210 moved from the 25th storage battery cell 210be and the storage battery cell 210 moved from the 44th storage battery cell 210dd are indicated by dotted lines. These storage battery cells 210 are adjacent to "2" storage battery cells 210. Thus, the number of adjacent storage battery cells 210 is increased by turning the ordinary trefoil formation structure into a trefoil formation structure as shown in Fig. 3B.

Defining the first direction along the y-axis and the second direction along the z-axis, the structures of Figs. 3A-3B are generalized as follows. A total of m×n (n is an integer equal to or larger than 4) storage battery cells are arranged in a trefoil formation structure comprised of m (m is an integer equal to larger than 4) tiers. In the first tier, n storage battery cells 210 are arranged in the first tier, n+1 storage battery cells 210 are arranged in the second tier, n storage battery cells 210 are arranged in the m-1th tier, and n-1 storage battery cells 210 are arranged in the m-th tier. The n storage battery cells 210 in the first tier are arranged inward of the n+1 storage battery cells 210 in the second tier in the second direction. The n-1 storage battery cells 210 in the m-th tier are arranged inward of the n storage battery cells 210 in the m-1th tier in the second direction. In the case m is an integer equal to or larger than 5, n storage battery cells 210 are arranged in the third tier through the m-2th tier.

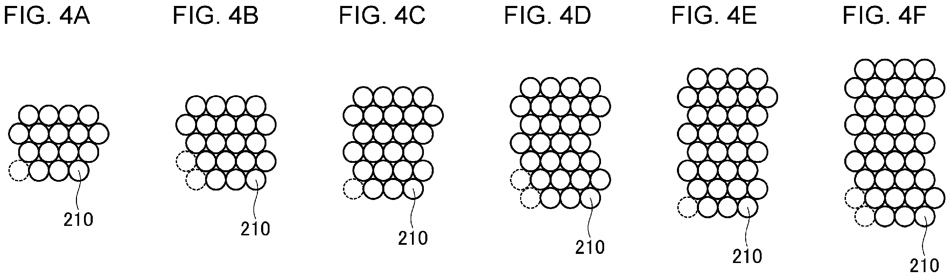

Figs. 4A-4F show arrangements of the storage battery cells 210. The figures show structures in which the number of tiers in the trefoil formation structure is changed from Figs. 3A-3B. Figs. 4A-4B are identical to Figs. 3A-3B, Fig. 4A shows the case of four (m=4) tiers, and Fig. 4B shows the case of five (m=5) tiers. Further, Fig. 4C shows a case of six (m=6) tiers, Fig. 4D shows a case of seven (m=7) tiers, Fig. 4C shows a case of eight (m=8) tiers, and Fig. 4C shows a case of nine (m=9) tiers.

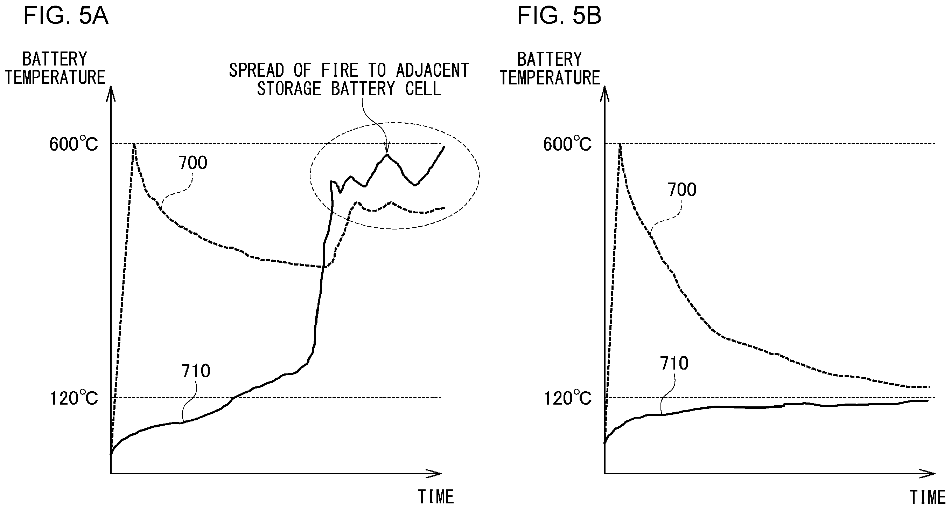

Figs. 5A-5B show temperature change in the storage battery cell 210. Fig. 5A is a graph showing how, when one of the storage battery cells 210 in an ordinary trefoil formation structure undergoes thermal runaway, the temperature of a thermal runaway storage battery cell 700 and the temperature of an adjacent storage battery cell 710 vary with time. The temperature of the thermal runaway storage battery cell 700 is increased rapidly when thermal runaway occurs. When the heat of the thermal runaway storage battery cell 700 is transferred to the adjacent storage battery cell 710, the temperature of the thermal runaway storage battery cell 700 drops, but the temperature of the adjacent storage battery cell 710 is increased. When the number of adjacent storage battery cells 710 is small, the adjacent storage battery cells 710 will catch fire with the elapse of time.

Fig. 5B is a graph showing how, when one of the storage battery cells 210 in the trefoil formation structure of Figs. 3A-3B, Figs. 4A-4F undergoes thermal runaway, the temperature of the thermal runaway storage battery cell 700 and the temperature of the adjacent storage battery cell 710 vary with time. The temperature of the thermal runaway storage battery cell 700 is increased rapidly when thermal runaway occurs. When the heat of the thermal runaway storage battery cell 700 is transferred to the adjacent storage battery cell 710, the temperature of the thermal runaway storage battery cell 700 drops. When the number of adjacent storage battery cells 710 is large, the adjacent storage battery cells 710 do not catch fire with the elapse of time.

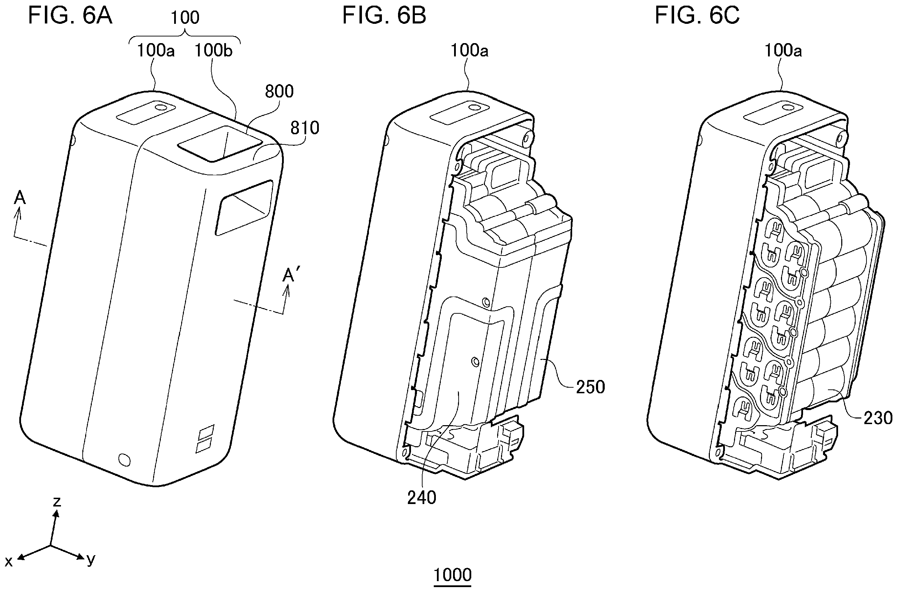

The shape of the outer case 100 is not limited to the illustrated shape. An alternative shape of the outer case 100 will be described below. Figs. 6A-6C are perspective views showing a structure of a storage battery module 1000 according to a variation. The storage battery module 1000 includes a first outer case 100a and a second outer case 100b, which are collectively referred to as an outer case 100. The first outer case 100a is provided on the left side, and the second outer case 100b is provided on the right side. The outer case 100 comprised of a combination of the first outer case 100a and the second outer case 100b has a shape of a box elongated in the vertical direction. A through hole 800 is formed to extend through the upper surface and the right surface of the second outer case 100. A rod-shaped handle 810 is provided in the through hole 800. The first outer case 100a and the second outer case 100b are made of, for example, resin.

Fig. 6B shows a structure revealed when the second outer case 100b of Fig. 6A is removed. The front case 240 and the rear case 250 are provided inside the first outer case 100a and the second outer case 100b. The front case 240 and the rear case 250 have a structure similar to that of Fig. 1B and are made of metal. Fig. 6C shows a structure revealed when the front case 240 and the rear case 250 of Fig. 6B are removed. The battery holder 230 is provided inside the front case 240 and the rear case 250. The battery holder 230 has a structure similar to that of Fig. 1C and is made of an insulative material such as resin. As in Fig. 1D, the storage battery assembly 200 is provided inside the battery holder 230.

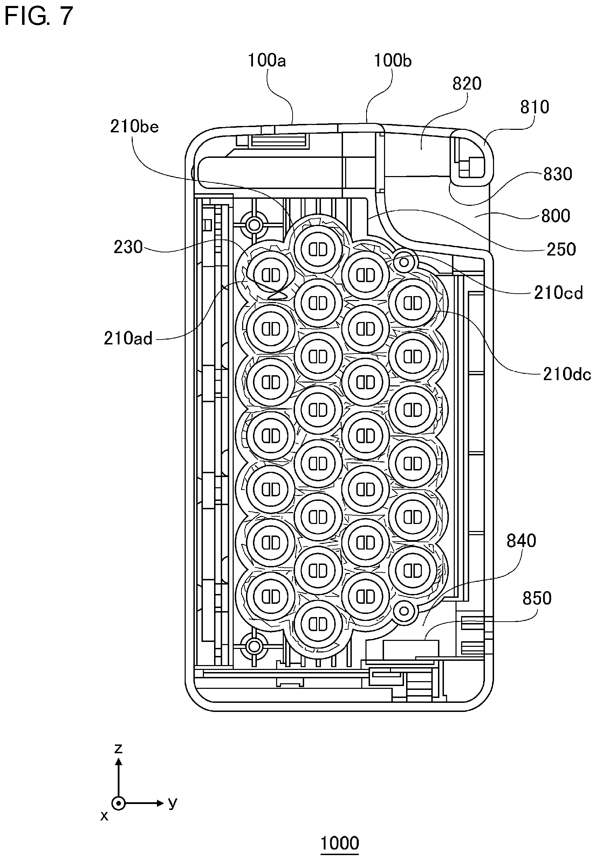

Fig. 7 is a cross-sectional view showing a structure of the storage battery module 1000 and shows an A-A' cross section of Fig. 6A. As described with reference to Figs. 6A-6B, the rear case 250 is provided inside the first outer case 100a and the second outer case 100b, the battery holder 230 is provided inside the rear case 250, and the storage battery cells 210 stacked in a trefoil formation structure of four tiers is provided inside the battery holder 230. The number of tiers in the trefoil formation structure is not limited to "4". The arrangement of the plurality of storage battery cells 210 is as shown in Fig. 3A, and the 14th storage battery cell 210ad, the 25th storage battery cell 210be, the 34th storage battery cell 210cd, and the 43rd storage battery cell 210dc are provided at the upper end. The upper end can be said to be one end in the second direction. The 25th storage battery cell 210be, the 34th storage battery cell 210cd, and the 43rd storage battery cell 210dc present a downward slope in the positive direction of the y-axis so that a space is formed. The through hole 800 is provided in the space, and the handle 810 is also provided. An R part 830, which is an arc surface, is provided at the corner of the handle 810 in the through hole 800. The R part 830 makes it easy to hold the handle 810.

Also, a handle component 820 is provided in the through hole 800. The handle component 820 has a shape of a frame including an inner wall of the through hole 800 and a wall of the handle 810 toward the through hole 800. The handle component 820 is made of metal. By providing the handle component 820, the rigidity of the handle 810 is improved. The arrangement of the plurality of storage battery cells 210 presents an upward slope in the positive direction of the y-axis. Therefore, a lower space 840 is formed between the plurality of storage battery cells 210 and the second outer case 100b. A terminal 850 for input and output of power in the plurality of storage battery cells 210 is provided in the lower space 840.

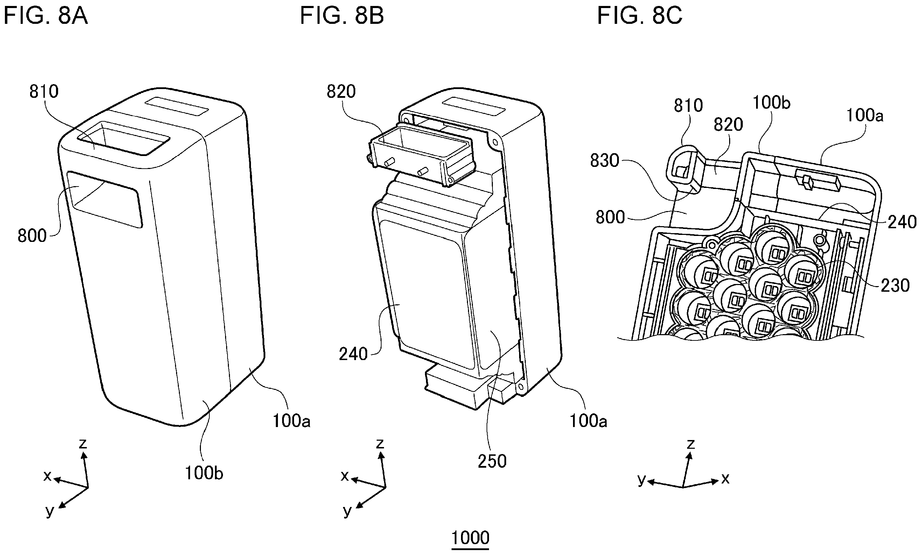

Figs. 8A-8C are perspective views showing a structure of the storage battery module 1000. Fig. 8A is a perspective view revealed when the storage battery module 1000 of Fig. 6A is viewed from a different direction. Fig. 8B shows a structure revealed when the second outer case 100b of Fig. 8A is removed. The handle component 820 has a shape of a frame extending in the height direction. Fig. 8C is a perspective view corresponding to Fig. 7.

According to the embodiment, the n storage battery cells 210 in the first tier are provided inward of the n+1 storage battery cells 210 in the second tier, and the n-1 storage battery cells 210 in the m-th tier are arranged inward of the n storage battery cells 210 in the m-1th tier so that the number of adjacent storage battery cells 210 can be increased. In the case m is an integer equal to or larger than 5, n storage battery cells 210 are arranged in the third tier through the m-2th tier so that the number of tiers can be increased.

Further, the high-temperature high-pressure gas emitted from the storage battery cell 210 is circulated inside the storage battery module 1000 and discharged from the outer discharge port so that the path on which the high-temperature high-pressure gas travels in the storage battery module 1000 can be extended. Further, the path on which the high-temperature high-pressure gas travels in the storage battery module 1000 can be extended so that the high-temperature high-pressure gas can be cooled. Further, the high-temperature high-pressure gas can be cooled so that the high-temperature high-pressure gas emitted from the storage battery cell 210 undergoing thermal runaway is inhibited from being discharged outside. Further, the path of the high-temperature high-pressure gas is formed on the first surface 270 and on the second surface 272 in the inner case 220 so that the path can be provided efficiently. Further, the path can be provided efficiently so that the size of the storage battery module 1000 can be reduced.

Further, the high-temperature high-pressure gas passes through the extended space 510 provided between the second surface 272 and the outer discharge port so that the pressure of the high-temperature high-pressure gas can be reduced. Further, the pressure of the high-temperature high-pressure gas is reduced so that the high-temperature high-pressure gas can be cooled. Further, the storage battery cell 210 having the anode 212 facing the first surface 270 and the storage battery cell 210 having the anode 212 facing the third surface 274 can be provided. Further, the fourth surface 276 is provided separately from the first surface 270 through the third surface 274 so that the impact from the high-temperature high-pressure gas on the fourth surface 276 can be reduced. Further, the outer case 100 includes the handle 810 provided at one end, in the second direction, of the trefoil formation structure of the storage battery cells 210 comprised of m tiers so that the size of the outer case 100, which includes the handle 810, can be reduced. Further, the R part 830 is included in the handle 810 and so makes it easy to hold the handle 810. Further, the handle 810 includes the handle component 820 so that the rigidity of the handle 810 can be improved. Further, the outer case 100 includes the terminal 850 at one end, in the second direction, of the trefoil formation structure of the storage battery cells 210 comprised of m tiers so that the size of the outer case 100, which includes the terminal 850, can be reduced.

A summary of an embodiment of the present disclosure is given below. A support member according to an embodiment of the present disclosure is for arranging m×n (n is an integer equal to or larger than 4) cylindrical storage battery cells (210) in a trefoil formation structure comprised of m (m is an integer equal to or larger than 4) tiers along a first direction, wherein along a second direction that intersects the first direction, n storage battery cells (210) are arranged in a first tier, n+1 storage battery cells (210) are arranged in a second tier, n storage battery cells (210) are arranged in an m-1th tier, and n-1 storage battery cells (210) are arranged in a m-th tier, the n storage battery cells (210) in the first tier are arranged inward of the n+1 storage battery cells (210) in the second tier in the second direction, and the n-1 storage battery cells (210) in the m-th tier are arranged inward of the n storage battery cells (210) in the m-1th tier in the second direction.

In the case m is an integer equal to or larger than 5 n storage battery cells (210) are arranged in a third through an m-2th tiers.

Another embodiment of the present disclosure relates to a storage battery module (1000). The storage battery module (1000) includes: a plurality of storage battery cells (210); an inner case (220) that houses the plurality of storage battery cells (210); and an outer case (100) that houses the inner case (220). Each of the plurality of storage battery cells (210) has a cylindrical shape, The inner case (220) includes a support member for arranging m×n (n is an integer equal to or larger than 4) storage battery cells (210) in a trefoil formation structure comprised of m (m is an integer equal to or larger than 4) tiers along a first direction. In the support member, along a second direction that intersects the first direction, n storage battery cells (210) are arranged in a first tier, n+1 storage battery cells (210) are arranged in a second tier, n storage battery cells (210) are arranged in an m-1th tier, and n-1 storage battery cells (210) are arranged in a m-th tier, the n storage battery cells (210) in the first tier are arranged inward of the n+1 storage battery cells (210) in the second tier in the second direction, and the n-1 storage battery cells (210) in the m-th tier are arranged inward of the n storage battery cells (210) in the m-1th tier in the second direction.

The outer case (100) may include a handle provided at one end of the trefoil formation structure of the storage battery cells (210) stacked in the m tiers.

Given above is a description of the present disclosure based on an exemplary embodiment. The embodiment is intended to be illustrative only and it will be understood by those skilled in the art that various modifications to constituting elements and processes could be developed and that such modifications are also within the scope of the present disclosure.

In the embodiment, the plurality of storage battery cells 210 are aligned in two directions. Alternatively, the plurality of storage battery cells 210 may be aligned in one direction. According to this variation, the flexibility in the configuration is improved.

In the embodiment, the storage battery cells 210 are used. Alternatively, however, batteries other than the storage battery cells 210 may be used. According to this variation, the flexibility in the configuration is improved.

In the embodiment, the inner case 220 is formed by combining the battery holder 230, the front case 240, and the rear case 250. Alternatively, the inner case 220 may be formed by combining at least one of the front case 240 or the rear case 250, and the battery holder 230. In this case, the configuration including the battery holder 230 represents the support member. According to this variation, the flexibility in the configuration is improved.

### [INDUSTRIAL APPLICABILITY]

According to the present disclosure, the number of adjacent batteries can be increased when a plurality of batteries are arranged in a trefoil formation.

### [REFERENCE SIGNS LIST]

100 outer case, 110 outer plate, 200 storage battery assembly, 210 storage battery cell (battery), 212 anode, 214 cathode, 220 inner case, 230 battery holder (support member), 240 front case, 242 front case front surface, 244 front case side surface, 250 rear case, 252 rear case rear surface, 254 rear case side surface, 260 inner discharge port, 264 intermediate discharge port, 270 first surface, 272 second surface, 274 third surface, 276 fourth surface, 280 left side wall, 284, 294 passage groove, 400 upper case, 410 handle, 500 lower case, 510 extended space, 600 upper packing, 610 lower packing, 700 thermal runaway storage battery cell, 710 adjacent storage battery cell, 1000 storage battery module.

## Claims

1. A support member for arranging m×n (n is an integer equal to or larger than 4) cylindrical batteries in a trefoil formation structure comprised of m (m is an integer equal to or larger than 4) tiers along a first direction, wherein
along a second direction that intersects the first direction, n batteries are arranged in a first tier, n+1 batteries are arranged in a second tier, n batteries are arranged in an m-1th tier, and n-1 batteries are arranged in a m-th tier,
the n batteries in the first tier are arranged inward of the n+1 batteries in the second tier in the second direction, and
the n-1 batteries in the m-th tier are arranged inward of the n batteries in the m-1th tier in the second direction.

2. The support member according to claim 1, wherein
in the case m is an integer equal to or larger than 5 n batteries are arranged in a third through an m-2th tiers.

3. A battery module comprising:
a plurality of storage battery cells;
an inner case that houses the plurality of storage battery cells; and
an outer case that houses the inner case, wherein
each of the plurality of storage battery cells has a cylindrical shape,
the inner case includes a support member for arranging m×n (n is an integer equal to or larger than 4) storage battery cells in a trefoil formation structure comprised of m (m is an integer equal to or larger than 4) tiers along a first direction, and
in the support member,
along a second direction that intersects the first direction, n storage battery cells are arranged in a first tier, n+1 storage battery cells are arranged in a second tier, n storage battery cells are arranged in an m-1th tier, and n-1 storage battery cells are arranged in a m-th tier,
the n storage battery cells in the first tier are arranged inward of the n+1 storage battery cells in the second tier in the second direction, and
the n-1 storage battery cells in the m-th tier are arranged inward of the n storage battery cells in the m-1th tier in the second direction.

4. The storage battery module according to claim 3, wherein
the outer case includes a handle provided at one end of the trefoil formation structure of the storage battery cells stacked in the m tiers.
